# EUROPÄISCHE PATENTSCHRIFT

(11) **EP 4 673 704 B1**
(45) Veröffentlichungstag und Bekanntmachung des Hinweises auf die Patenterteilung: **08.04.2026**
(21) Anmeldenummer: 25719326.8
(22) Anmeldetag: 09.04.2025
(51) Int. Cl.: G01C 21/30, B60W 40/072, G01S 19/14, G01S 19/48, G06V 20/56, G01S 19/42

(54) **VERFAHREN ZUR BESTIMMUNG DER VON EINEM FAHRZEUG BEFAHRENEN STRASSE UND FAHRZEUG**
METHOD FOR DETERMINING THE ROAD ON WHICH A VEHICLE IS TRAVELLING, AND VEHICLE
PROCÉDÉ DE DÉTERMINATION DE LA ROUTE SUR LAQUELLE SE DÉPLACE UN VÉHICULE ET VÉHICULE

(30) Priorität: 16.05.2024 DE 102024001584
(43) Veröffentlichungstag der Anmeldung: 07.01.2026
(73) Patentinhaber: Mercedes-Benz Group AG, 70372 Stuttgart (DE)
(72) Erfinder: RIES, Florian, 70599 Stuttgart (DE)
(74) Vertreter: Novagraaf Group
(86) Internationale Anmeldenummer: PCT/EP2025/059731
(87) Internationale Veröffentlichungsnummer: WO 2025/237596

(56) Entgegenhaltungen:
- DE-A1- 102021 127 657
- DE-A1- 102022 125 804

## Beschreibung

Die Erfindung betrifft ein Verfahren zur Bestimmung der von einem Fahrzeug befahrenen Straße nach der im Oberbegriff von Anspruch 1 näher definierten Art sowie ein Fahrzeug zur Durchführung des Verfahrens.

Mit Hilfe eines Navigationssystems kann sich eine fahrzeugführende Person einfacher orientieren, insbesondere in einer unbekannten Region. Beispielsweise kann mittels des Navigationssystems eine Navigationsroute vom aktuellen Aufenthaltsort des Fahrzeugs zu einem Zielort ausgegeben werden. Zur Bestimmung des Aufenthaltsorts verfügen Navigationssysteme typischerweise über einen Empfänger für ein globales Navigationssatellitensystem wie GPS, Galileo und dergleichen.

Insbesondere im Zuge des automatisierten Fahrens nimmt dabei die Bedeutung von sogenannten hochaufgelösten Karten, auch als HD-Karte bezeichnet, zu. Eine solche digitale Straßenkarte umfasst eine virtuelle Nachbildung des Straßenverkehrsnetzes in einer hohen Auflösung. Hierdurch können den Straßenverlauf betreffende Informationen zentimetergenau an nachgelagerte Fahrerassistenzsysteme übergeben werden. Bestimmte Fahrerassistenzsystemfunktionen, wie beispielsweise ein Spurwechselassistent, dürfen dabei nur unter geeigneten Rahmenbedingungen eingesetzt werden. Beispielsweise kann die Nutzung des besagten Spurwechselassistenten nur auf bestimmten Straßentypen oder gar Straßenabschnitten erlaubt sein. Eine Information zum Freischalten oder Sperren besagter Fahrerassistenzfunktionen kann in der digitalen Straßenkarte ortsspezifisch gespeichert sein.

Im Straßenverkehrsnetz lassen sich häufig zwei zueinander parallel verlaufende Straßen antreffen. Dabei kann es vorkommen, dass der Einsatz eines Fahrerassistenzsystems auf einer der beiden Straßen erlaubt ist, nicht jedoch auf der anderen Straße. Dies macht es entsprechend erforderlich, die Aufenthaltsposition des Fahrzeugs so genau zu ermitteln, dass zuverlässig differenziert werden kann auf welcher der beiden parallel zueinander verlaufenden Straßen sich das Fahrzeug tatsächlich befindet. Dabei kann es sogar vorkommen, beispielsweise aufgrund von veraltetem Kartenmaterial, dass eine besagte Parallelstraße in der digitalen Straßenkarte überhaupt nicht verzeichnet ist. Dies kann das Lokalisieren des Fahrzeugs auf einer Straße zusätzlich erschweren.

Bekannte Ansätze zur genauen Verortung von Fahrzeugen auf einer Straße beruhen auf der Integration aufwändiger und damit teurer Positionsbestimmungsmittel in das jeweilige Fahrzeug. Durch das Verbauen solcher Zusatzkomponenten kann der Positionsbestimmungsfehler typischer GNSS-basierter Positionsbestimmungsmittel reduziert werden. Ein anderer Lösungsansatz basiert auf dem Verzeichnen von Infrastrukturelementen in der digitalen Straßenkarte und der sensorischen Erfassung der Infrastrukturelemente durch das Fahrzeug. Durch einen Vergleich der vom Fahrzeug erkannten und der in der digitalen Straßenkarte verzeichneten Infrastrukturelemente kann die Aufenthaltsposition des Fahrzeugs genauer bestimmt werden. Dies erfordert jedoch das Anlegen und Pflegen der entsprechenden Daten in der Straßenkarte sowie einen Berechnungsaufwand im Fahrzeug zur Durchführung der besagten Objekterkennung.

Aus der EP 3 669 142 B1 ist ein Verfahren zur Positionsbestimmung eines Fahrzeugs bekannt, bei der eine mittels eines globalen Navigationssatelittensystems bestimmte Fahrzeugposition mit einer auf der visuellen Erfassung von Landmarken basierenden Positionsbestimmung fusioniert wird. Wird mittels beider Positionsbestimmungsmethoden der Aufenthalt des Fahrzeugs auf einem Streckenabschnitt erkannt, auf dem eine automatisierte Fahrfunktion freigegeben ist, so wird diese Fahrfunktion auch tatsächlich zur Nutzung im Fahrzeug aktiviert. Dabei kann ein Bereich um das Fahrzeug festgelegt werden, in dem sich keine Parallelstraßen zu der vom Fahrzeug befahrenen Straße befinden dürfen, damit die automatisierte Fahrfunktion freigegeben wird.

Zudem offenbart die DE 10 2023 001 648 A1 ein Verfahren zur Fahrspurlokalisierung eines Fahrzeugs. Dabei werden aus einer digitalen Straßenkarte Attribute ausgelesen und mit sensorisch erfassten Attributen im Umfeld des Fahrzeugs abgeglichen.

Ferner offenbart die DE 10 2019 200 423 A1 ein Verfahren zum Bereitstellen eines Integritätsbereichs einer Parameterschätzung. Dabei wird eine Integritätsinformation auf Basis von GNSS-Daten, GNSS-Korrekturdaten und unter Berücksichtigung von Sensordaten, die von einem Fahrzeug mittels einer Umfeldsensorik generiert werden, ermittelt. Diese Integritätsinformation liegt in einer rotationsvarianten Form, also in einer nicht-rotationsinvarianten Form, vor. Bei der Integritätsinformation kann es sich um den Aufenthaltswahrscheinlichkeitsbereich des Fahrzeugs in einer digitalen Straßenkarte handeln. Der Aufenthaltswahrscheinlichkeitsbereich kann die Form einer Ellipse annehmen.

DE 10 2022 125804 A1 offenbart ein Verfahren und Vorrichtung zum Bestimmen einer durch ein Fahrzeug befahrenen Straße, wobei eine geografische Position des Fahrzeugs bestimmt und auf dieser Basis eine Hypothese für die befahrene Straße laut Kartendaten bestimmt wird. Diese Hypothese kann dann überprüft werden, indem eine Krümmung der befahrenen Straße mit einer Krümmung der als Hypothese bestimmten Straße laut den Kartendaten verglichen wird.

Der vorliegenden Erfindung liegt die Aufgabe zugrunde ein verbessertes Verfahren zur Bestimmung der von einem Fahrzeug befahrenen Straße anzugeben, welches sich durch einen geringen technischen Aufwand auszeichnet und dabei zuverlässig erlaubt zu ermittelt, auf welcher von zwei zueinander parallel verlaufenden Straßen sich das Fahrzeug tatsächlich aufhält.

Erfindungsgemäß wird diese Aufgabe durch ein Verfahren zur Bestimmung der von einem Fahrzeug befahrenen Straße mit den Merkmalen des Anspruchs 1 gelöst. Vorteilhafte Ausgestaltungen und Weiterbildungen sowie ein Fahrzeug zur Durchführung des Verfahrens ergeben sich aus den hiervon abhängigen Ansprüchen.

Ein gattungsgemäßes Verfahren zur Bestimmung der von einem Fahrzeug befahrenen Straße, wobei das Fahrzeug mit einer Recheneinheit Sensordaten eines navigationssatellitensystembasierten Positionsbestimmungsmittels mit Sensordaten einer Umfeldsensorik fusioniert, wird erfindungsgemäß durch die folgenden von der Recheneinheit ausgeführten Verfahrensschritte weitergebildet:
- Ermitteln einer vom Fahrzeug befahrenen Straße in einer digitalen Straßenkarte in Übereinkunft mit einer vom Positionsbestimmungsmittel ermittelten GNSS-Position;
- Auslesen einer ersten Krümmungsinformation der Straße an der GNSS-Position aus der digitalen Straßenkarte;
- Ermitteln einer zweiten Krümmungsinformation der vom Fahrzeug befahrenen Straße aus den von der Umfeldsensorik gelieferten Sensordaten;
- Modellieren von dritten Krümmungsinformationen für eine vorhandene oder angenommene Parallelstraße der vom Fahrzeug befahrenen Straße aus einem Vorgabewert und der ersten Krümmungsinformation;
- Vergleichen der ersten, zweiten und dritten Krümmungsinformation; und
- Festlegen des Aufenthalts des Fahrzeugs auf der Straße oder auf der Parallelstraße in Abhängigkeit des Vergleichs der ersten, zweiten und dritten Krümmungsinformation.

Dem erfindungsgemäßen Verfahren liegt die Idee zugrunde, die Bestimmung des Aufenthalts des Fahrzeugs auf einer von zwei parallel zueinander verlaufenden Straßen in Abhängigkeit der Krümmung der beiden Straßen festzulegen. Hierzu wird zuerst mit Hilfe eines globalen Navigationssatelittsystems der Aufenthaltsort des Fahrzeugs ermittelt und dieser mit einer digitalen Straßenkarte abgeglichen. Durch bewährte Kartenabgleichverfahren, auch als "map matching" bezeichnet, kann dann eine in der digitalen Straßenkarte vom Fahrzeug befahrene Straße festgelegt werden. Neben dieser Straße können ein oder zwei Parallelstraßen verlaufen. Diese Parallelstraßen können in der digitalen Straßenkarte verzeichnet sein, oder auch nicht. Beispielsweise kann eine erste Parallelstraße links und eine zweite Parallelstraße rechts zur Straße verlaufen. Es kann auch nur eine Parallelstraße vorhanden sein.

Da alle Straßen parallel zueinander verlaufen, sind diese im Bereich einer Kurve um denselben Kreismittelpunkt gekrümmt. In Radialrichtung betrachtet sind somit die Straße und die jeweilige Parallelstraße hintereinander angeordnet, sodass sie einen unterschiedlichen Krümmungsradius aufweisen. Die Anmelderin hat erkannt, dass dieser Sachverhalt dazu ausgenutzt werden kann, den Aufenthalt des Fahrzeugs auf einer Parallelstraße der Straße zu validieren oder auszuschließen. Weicht nämlich die mit Hilfe der Umfeldsensorik ermittelte Krümmung der vom Fahrzeug befahrenen Straße zu der aus der digitalen Straßenkarte ausgelesenen Krümmung ab, so ist dies ein Indiz dafür, dass der Aufenthalt des Fahrzeugs auf der falschen Straße angenommen wurde. Stimmen hingegen die sensorisch ermittelte Krümmung und die aus der digitalen Straßenkarte ausgelesene Krümmung (innerhalb einer gewissen Toleranz) überein, ist dies ein Indiz dafür, dass der Aufenthalt des Fahrzeugs auf der richtigen Straße angenommen wurde.

Hierzu ermittelt das Fahrzeug bzw. die Recheneinheit zuerst mit Hilfe des navigationssatellitensystembasierten Positionsbestimmungsmittels, beispielsweise mit Hilfe eines GNSS-Empfängers für ein GPS-Signal, den aktuellen Aufenthaltsort des Fahrzeugs. Die Recheneinheit bestimmt dann in Abhängigkeit der ermittelten GNSS-Position eine Straße, auf der der Aufenthalt des Fahrzeugs angenommen wird. In der digitalen Straßenkarte sind entsprechende Straßen mit einer Krümmungsinformation versehen. Diese Krümmungsinformation liegt für die einzelnen Straßenabschnitte der respektiven Straßen vor. Die Recheneinheit berücksichtigt dann die Krümmungsinformation für denjenigen Straßenabschnitt, der mit der ermittelten GNSS-Position übereinstimmt.

Anschließend ermittelt das Fahrzeug bzw. die Recheneinheit die zweite Krümmungsinformation basierend auf den mittels der Umfeldsensorik generierten Sensordaten. Hierzu können bewährte Verfahren eingesetzt werden. Beispielsweise kann das Fahrzeug sein Umfeld mit einer oder mehreren Umgebungskameras erfassen. Dies ermöglicht es durch den Einsatz bewährter Bildverarbeitungsalgorithmen, auch als "Computervision" bezeichnet, beispielsweise den Fahrspurverlauf aus einem oder mehreren aufeinanderfolgenden Kamerabildern zu ermitteln. Hierzu kann eine Objektdetektion durchgeführt werden, beispielsweise zur Erkennung von Fahrbahnmarkierungen. Das Fahrzeug kann weitere Umgebungssensoren wie beispielsweise ein Radarsensorsystem, ein Ultraschallsensorsystem und/oder ein LiDAR umfassen, mit deren Hilfe das Erzeugen von Tiefeninformationen möglich ist. Dies ermöglicht es dem Fahrzeug sein Umfeld abzutasten und beispielsweise den Relativabstand zu einer Randbegrenzung der Fahrbahn zu ermitteln. Aus dem Verlauf der detektierten und abgetasteten Objekte kann dann auf die Krümmung der Straße zurückgeschlossen werden. Dies ermöglicht es die zweite Krümmungsinformation bereitzustellen. Optional kann dabei nicht nur die vom Fahrzeug befahrene Fahrspur, sondern auch eine jeweilige Nachbarspur vermessen werden. Hierdurch lässt sich eine noch genauere zweite Krümmungsinformation erheben. Auch könnte ein Mittelwert für die Straßenkrümmung berechnet werden, beispielsweise verlaufend an der Position der Straßenmitte.

Generell könnte es bereits ausreichen die erste Krümmungsinformation und die zweite Krümmungsinformation zu vergleichen, um einen Aufenthalt des Fahrzeugs auf der Straße oder der Parallelstraße zu bestimmen. Aufgrund von beispielsweise Messungenauigkeiten kann es jedoch passieren, dass sich das Fahrzeug tatsächlich auf der angenommenen Straße aufhält, obwohl die zweite Krümmungsinformation von der ersten Krümmungsinformation abweicht. Durch das zusätzliche Berücksichtigen der dritten Krümmungsinformation lässt sich situationsbedingt festlegen, ab welchem Abweichungsmaß von der zweiten Krümmungsinformation zur ersten Krümmungsinformation sich das Fahrzeug mit höherer Wahrscheinlichkeit auf der Parallelstraße aufhält. Hierzu wird der Vorgabewert mit der ersten Krümmungsinformation als positiver oder negativer Wertverrechnet, je nachdem, ob die Parallelstraße bei einer Links- bzw. Rechtskurve links oder rechts zur Straße liegt, also in radiale Richtung weiter innen oder außen. Wird beispielsweise bei einer Linkskurve eine Parallelstraße aus Fahrtrichtung rechts zur Straße angenommen, so wird ein positiverVorgabewert zur Berechnung verwendet. Wird hingegen bei einer Linkskurve eine Parallelstraße links der Straße angenommen, so wird ein negativer Wert verwendet.

In Abhängigkeit der Ausprägung der ersten, zweiten und dritten Krümmungsinformation ist die Recheneinheit dann dazu in der Lage zuverlässig zu bestimmen, ob sich das Fahrzeug tatsächlich auf der Straße oder einer parallel hierzu verlaufenden Parallelstraße befindet. Das erfindungsgemäße Verfahren benötigt dabei vergleichsweise wenige Eingangsdaten, welche insbesondere bei einem Fahrzeug mit zumindest teilautomatisierten Fahrfunktionen ohnehin vorliegen. Es werden keine zusätzlichen und damit teuren Systemkomponenten benötigt, wie beispielsweise eine Zusatzhardware zur Verbesserung der GNSS-Positionsbestimmungsgüte. Die Funktionsweise des erfindungsgemäßen Verfahrens ist analytisch nachvollziehbar und damit deterministisch. Es ist sogar möglich eine Wahrscheinlichkeit für den Aufenthalt des Fahrzeugs auf der Straße bzw. Parallelstraße anzugeben, worauf im Folgenden noch näher eingegangen wird.

Eine vorteilhafte Weiterbildung des erfindungsgemäßen Verfahrens sieht dabei vor, dass
- die Recheneinheit den Aufenthalt des Fahrzeugs auf der Straße festlegt, wenn die zweite Krümmungsinformation eine größere Übereinstimmung mit der ersten Krümmungsinformation aufweist als die dritte Krümmungsinformation oder die Recheneinheit den Aufenthalt des Fahrzeugs auf der Parallelstraße festlegt, wenn die zweite Krümmungsinformation eine größere Übereinstimmung mit der dritten Krümmungsinformation aufweist als die erste Krümmungsinformation;
- die Recheneinheit eine Konfidenz für den Aufenthalt auf der Straße und/oder der Parallelstraße ermittelt, wobei die Konfidenz einen Maximalwert annimmt, wenn die zweite Krümmungsinformation nahezu identisch mit der ersten ist und mit zunehmender Differenz zur ersten und zunehmenden Nähe zur dritten Krümmungsinformation abnimmt; oder
- die Recheneinheit ein Verhältnis aus der Wahrscheinlichkeit, dass die zweite Krümmungsinformation auf einer störbehafteten Messung auf der Straße basiert, zu der Wahrscheinlichkeit, dass die zweite Krümmungsinformation auf einer störbehafteten Messung auf der Parallelstraße basiert, bildet, und in Abhängigkeit des Vergleichs des Verhältnisses mit einem festgelegten Verhältnisschwellenwert festlegt, ob sich das Fahrzeug auf der Straße oder der Parallelstraße befindet.

Somit kommen verschiedene Möglichkeiten für den Vergleich der ersten, zweiten und dritten Krümmungsinformation infrage, welche sich durch ihren Aufwand und ihren Ergebnisumfang unterscheiden.

Im einfachsten Falle prüft die Recheneinheit lediglich, ob die zweite Krümmungsinformation eine größere Ähnlichkeit zur ersten oder zur dritten Krümmungsinformation aufweist. Ist die Ähnlichkeit zur ersten Krümmungsinformation größer, so wird der Aufenthalt des Fahrzeugs auf der Straße angenommen und ansonsten auf der Parallelstraße.

Ergänzend zur einfachen Differenzierung, ob sich das Fahrzeug auf der Straße oder der Parallelstraße aufhält, kann auch besagte Konfidenz ermittelt werden. Anhand der Konfidenz lässt sich beschreiben, wie zuverlässig das Fahrzeug bzw. die Recheneinheit zwischen dem Aufenthalt auf der Straße oder der Parallelstraße unterscheiden kann. Stimmen beispielsweise die erste und zweite Krümmungsinformation überein, so erreicht die Konfidenz ihren Maximalwert, beispielsweise "1", "100%" oder dergleichen. Mit zunehmender Differenz zwischen der ersten und zweiten Krümmungsinformation sinkt die Konfidenz ab. Dabei kann ein Grenzwert für die Differenz zwischen der ersten und zweiten Krümmungsinformation festgelegt werden, zu dem die Konfidenz ihren Minimalwert annimmt, beispielsweise "0", "0%" oder dergleichen. Das Maß, mit dem sich die Konfidenz zwischen dem Maximalwert und dem Minimalwert in Abhängigkeit der Differenz zwischen der ersten und zweiten Krümmungsinformation bzw. der zweiten und dritten Krümmungsinformation ändert, kann dabei linear sein oder auch progressiv oder degressiv. Beispielsweise kann das Maß, mit dem sich die Konfidenz ändert, einer Sigmoid-Funktion folgen. Es kann die Konfidenz lediglich für den Vergleich der zweiten Krümmungsinformation mit der ersten Krümmungsinformation oder für den Vergleich der zweiten Krümmungsinformation mit der dritten Krümmungsinformation angegeben werden, oder auch gleichzeitig sowohl für den Vergleich der zweiten Krümmungsinformation mit der ersten, als auch mit der dritten Krümmungsinformation. Sinkt die Konfidenz für die Übereinstimmung zwischen der zweiten Krümmungsinformation mit der ersten Krümmungsinformation ab, so wird die Konfidenz für die Übereinstimmung zwischen der zweiten Krümmungsinformation und der dritten Krümmungsinformation ansteigen.

Wie zuverlässig die Recheneinheit den Aufenthalt des Fahrzeugs auf der korrekten Straße ermittelt, lässt sich zudem anhand des Verhältnisses aus den beiden besagten Wahrscheinlichkeiten bewerten. Dieses Wahrscheinlichkeitsverhältnis beschreibt einen Bruch, dessen Zähler repräsentativ ist für die Annahme, dass die zweite Krümmungsinformation auf einer störbehafteten Messung auf der Straße basiert und dessen Nenner repräsentativ dafür ist, dass die zweite Krümmungsinformation auf einer störbehafteten Messung auf der Parallelstraße basiert. Die "Wahrscheinlichkeit" kann auch als "Likelihood" bezeichnet werden und durch eine Funktion ausgedrückt werden. So können die jeweiligen Wahrscheinlichkeiten im Zähler und Nenner des Bruchs beispielsweise durch eine Funktion zur Beschreibung einer Gaußschen Normverteilung beschrieben werden. Der Erwartungswert der Funktion im Zähler entspricht dann der ersten Krümmungsinformation und der Erwartungswert der Funktion im Nenner der dritten Krümmungsinformation. Dabei kann als Standardabweichung für beide Funktionen die Messungenauigkeit der sensorischen Ermittlung der zweiten Krümmungsinformation herangezogen werden. Die Messungenauigkeit kann dabei vom Messverfahren selbst ausgegeben werden oder auch in Form eines festen Standardwerts angegeben sein, beispielsweise basierend auf Residuen oder dem Least-Squares-Verfahren. Beide Funktionen werden unter Berücksichtigung der zweiten Krümmungsinformation miteinander verglichen. Das Verhältnis, bzw. der Bruch, stellt dann das Verhältnis aus der Differenz zwischen der zweiten Krümmungsinformation zum Erwartungswert der ersten Krümmungsinformation zur Differenz zwischen der zweiten Krümmungsinformation zum Erwartungswert der dritten Krümmungsinformation dar. Situationsbedingt können verschiedene Verhältnisschwellenwerte festgelegt werden, anhand derer entschieden wird, ob sich das Fahrzeug auf der Straße oder der Parallelstraße aufhält.

Entsprechend einer weiteren vorteilhaften Ausgestaltung des erfindungsgemäßen Verfahrens wird als Krümmungsinformation ein Krümmungswert beziehungsweise ein als Krümmungsradius bezeichneter Kehrwert des Krümmungswertes des vom Fahrzeug befahrenen Straßenabschnitts an der Aufenthaltsposition des Fahrzeugs verwendet. Der konstante Krümmungswert beispielsweise bei einem Kreisbogen ist dabei der Kehrwert 1/r des Kurvenradius r. Anhand des Krümmungswertes bzw. des Krümmungsradius lässt sich die Krümmung eines Straßenabschnitts eindeutig und zuverlässig beschreiben. Der Krümmungswert bzw. Krümmungsradius kann für einen Straßenabschnitt über die Straßenbreite bzw. Fahrbahnbreite gemittelt sein. Es können auch für verschiedene Fahrspuren individuelle Krümmungswerte bzw. Krümmungsradien kann angegeben sein, beispielsweise hinterlegt in der digitalen Straßenkarte oder auch gemessen mit Hilfe der Umfeldsensorik. Dies ermöglicht es den für die vom Fahrzeug befahrene Fahrspur geltenden Krümmungswert bzw. Krümmungsradius zu verwenden. Dabei kann der Krümmungswert bzw. Krümmungsradius auch in Verlaufsrichtung des jeweiligen Straßenabschnitts gemittelt werden. Beispielsweise können in der digitalen Straßenkarte entsprechende Krümmungwert- oder Krümmungssradiusinformationen alle x Meter, beispielsweise alle 5 Meter, 10 Meter, 50 Meter oder auch Bruchteile oder Vielfache hiervon, hinterlegt sein. Es wird dann die jeweilige Krümmungwert- oder Krümmungsradiusinformation aus der digitalen Straßenkarte ausgelesen, die der GNSS-Position auf dem Straßenabschnitt am nächsten liegt.

Eine vorteilhafte Weiterbildung des erfindungsgemäßen Verfahrens sieht ferner vor, dass ein fest vorgegebener Vorgabewert d oder ein adaptiver Vorgabewert d verwendet wird, wobeidie Recheneinheit zur Bestimmung des adaptiven Vorgabewerts die Fahrbahnbreite und/oder die Randbegrenzungsbreite aus den von der Umfeldsensorik ermittelten Sensordaten ermittelt und/oder aus der digitalen Straßenkarte ausliest und den adaptiven Vorgabewert d in Abhängigkeit der Fahrbahnbreite und/oder Randbegrenzungsbreite festlegt. So kann beispielsweise ein Abstand d₁ ermittelt werden, der dem Abstand der Mittellinie M der vom Fahrzeug 1 befahrenen Fahrspur zum äußeren Straßenrand beschreibt. Daran schließt sich ein Abstand d₂ an, der einem Abstand der Straße S zur Parallelstraße P entspricht. Daran kann sich wiederum ein Abstand d₃ anschließen, der dem Abstand des inneren Straßenrands der Parallelstraße P zur Mittellinie m der potenziell vom Fahrzeug 1 bei einem Aufenthalt auf der Parallelstraße P befahrenen Fahrspur entspricht, wobei d dabei einer Summe der Abstände d₁, d₂ und d₃ entspricht.

Durch die Verwendung eines fest vorgegebenen Vorgabewerts lässt sich der technische Aufwand zur Durchführung des erfindungsgemäßen Verfahrens noch weiter reduzieren. Als fest vorgegebener Vorgabewert kann eine feste Entfernung wie beispielsweise 5 Meter, 7,5 Meter, 10 Meter oder auch Bruchteile oder Vielfache hiervon verwendet werden. Der Vorgabewert beschreibt einen Abstand der vom Fahrzeug befahrenen Fahrspur auf der Straße und der Parallelstraße. Somit berücksichtigt der Vorgabewert die Breite der jeweiligen Straßen und den Abstand der Straße und der Parallelstraße zueinander gleichermaßen.

Mit Hilfe des adaptiven Vorgabewerts kann die real vorliegende Krümmung der Parallelstraße hingegen genauer abgeschätzt werden. Beispielsweise kann aus der digitalen Straßenkarte ermittelt werden, dass die Straße, auf der der Aufenthalt des Fahrzeugs angenommen wird, über zwei Fahrspuren je Fahrtrichtung mit einer jeweiligen Fahrspurbreite von 3 Metern verfügt. Dabei kann angenommen werden, dass sich das Fahrzeug auf der linken oder auf der rechten Fahrspur befindet, oder auch mittig dazwischen, sodass als Wert für die Straßenbreite, d.h. die Breite der Straße vom Fahrzeugmittelpunlt zum Straßenrand beispielsweise 1,5 Meter, 3 Meter, 4,5 Meter oder 6 Meter verwendet werden. Auf diesen Wert wird ein Mindestabstand zwischen der Straße und Parallelstraße von beispielsweise 1 Meter hinzuaddiert, der entweder als fester Wert vorgegeben, aus einer digitalen Karte ausgelesen oder mit Umfeldsensorik bestimmt wird, Auch könnte mit Hilfe der Umfeldsensorik bestimmt werden, auf welcher der beiden Fahrspuren sich das Fahrzeug genau aufhält, um den passenden Wert zur Bestimmung des fest vorgegebenen Vorgabewerts zu ermitteln.

Durch das Auswerten der von der Umfeldsensorik generierten Sensordaten kann auch die Fahrbahnbreite und/oder die Randbegrenzungsbreite gemessen werden. Dies erlaubt es den adaptiven Vorgabewert noch genauer zu bestimmen. Der Abstand d₃ entspricht dem Abstand des inneren Straßenrands der Parallelstraße zur Mitte, oder auch zum Mittelpunkt des Fahrzeugs auf der potenziell vom Fahrzeug 1 befahrenen Fahrspur der Parallelstraße P.

Entsprechend einer weiteren vorteilhaften Ausgestaltung des erfindungsgemäßen Verfahrens ist es ferner vorgesehen, dass die Recheneinheit das Abarbeiten der weiteren Verfahrensschritte unterlässt, wenn die erste und/oder zweite Krümmungsinformation größer ist als ein vorgegebener Krümmungsschwellenwert oder eine Differenz der zweiten Krümmungsinformation zur ersten Krümmungsinformation oder der zweiten Krümmungsinformation zur dritten Krümmungsinformation größer ist als ein vorgegebener Differenzschwellenwert. Dies erlaubt es dem Fahrzeug bzw. der Recheneinheit zu ermitteln, ob eine Situation vorliegt, in der der Aufenthalt des Fahrzeugs auf der Straße oder der Parallelstraße nicht mit ausreichender Zuverlässigkeit ermittelt werden kann.

Das erfindungsgemäße Verfahren beruht auf der Prämisse, dass, wenn die Straße eine Krümmung aufweist, alle potenziell vorhandenen Parallelstraßen auch eine Krümmung um denselben Kreismittelpunkt beschreiben. Befindet sich das Fahrzeug also auf einer Geraden, so ist die Ausprägung der ersten, zweiten und dritten Krümmungsinformation gleich, beispielsweise unendlich. Die Recheneinheit kann dann nicht differenzieren, auf welcher Straße sich das Fahrzeug tatsächlich aufhält. Es ist möglich in einer solchen Situation eine entsprechende Hinweisnachricht an die fahrzeugführende Person des Fahrzeugs auszugeben. Die Hinweisnachricht kann visuell, akustisch und/oder haptisch ausgegeben werden. Situationsbedingt kann hierzu ein geeigneter Krümmungsschwellenwert festgelegt werden.

Ist die Differenz zwischen der zweiten Krümmungsinformation und der ersten Krümmungsinformation bzw. der zweiten Krümmungsinformation und der dritten Krümmungsinformation größer als der vorgegebene Differenzschwellenwert, so kann es sich ebenfalls um eine Fehlmessung handeln. In diesem Falle kann es ebenfalls nicht möglich sein, zuverlässig zwischen einem Aufenthalt des Fahrzeugs auf der Straße oder der Parallelstraße zu unterscheiden.

Eine weitere vorteilhafte Ausgestaltung des erfindungsgemäßen Verfahrens sieht ferner vor, dass die Recheneinheit die erste, zweite und dritte Krümmungsinformation und/oder Vergleichsergebnisse in Form von Konfidenzen oder relativen Wahrscheinlichkeiten für diese Krümmungsinformationen für eine festgelegte Zeitdauer oder eine festgelegte vom Fahrzeug zurückzulegende Wegstrecke aggregiert und die jeweiligen aggregierten Krümmungsinformationen bzw. Vergleichsergebnisse mittelt und/oder filtert, bevor die Recheneinheit ermittelt, ob sich das Fahrzeug auf der Straße oder der Parallelstraße befindet. Durch das Berücksichtigen der entsprechend gemittelten bzw. gefilterten Größen, lässt sich eine noch zuverlässigere Aussage darüber treffen, auf welcher Straße sich das Fahrzeug tatsächlich aufhält. Vergleichsergebnisse lassen sich dabei in viel größerem Umfang aggregieren, da die Krümmungsinformationen ja nur innerhalb ihres Kurvensegments gelten.

Entsprechend einer weiteren vorteilhaften Ausgestaltung des erfindungsgemäßen Verfahrens stellt die Recheneinheit eine auf der Straße freigegebene Fahrerassistenzfunktion zur Anwendung bereit, wenn der Aufenthalt des Fahrzeugs auf der Straße bestätigt wird und unterbindet die Anwendung der Fahrerassistenzfunktion, wenn der Aufenthalt des Fahrzeugs auf der Parallelstraße bestätigt wird. Mit Hilfe des erfindungsgemäßen Verfahrens kann zuverlässig bestimmt werden, ob sich das Fahrzeug auf der Straße oder der Parallelstraße aufhält. Entsprechend können jeweilige Fahrerassistenzfunktionen auf zumindest einer der beiden Straßen zur Nutzung freigegeben sein oder gesperrt sein. Da es nun möglich ist, zuverlässiger den korrekten Aufenthalt des Fahrzeugs auf einer jeweiligen Straße zu ermitteln, kann auch die Zuverlässigkeit erhöht werden, dass die entsprechende Fahrerassistenzfunktion korrekterweise tatsächlich im Fahrzeug zur Anwendung bereitgestellt bzw. gesperrt wird.

Besonders vorteilhaft handelt es sich dabei bei der Fahrerassistenzfunktion um eine Funktion zur zumindest teilautomatisierten Steuerung des Fahrzeugs. Beispielsweise kann dabei die Fahrzeuglängs- und/oder -querführung durch eine Recheneinheit des Fahrzeugs übernommen werden.

Bei einem gattungsgemäßen Fahrzeug, umfassend eine Recheneinheit, ein navigationssatellitensystembasiertes Positionsbestimmungsmittel und eine Umfeldsensorik, ist es erfindungsgemäß vorgesehen, dass die Recheneinheit über zumindest Lesezugriff auf ein computerlesbares Speichermedium verfügt, beherbergend ein Computerprogrammprodukt, umfassend maschineninterpretierbare Anweisungen, die bei einer Ausführung durch einen Prozessor der Recheneinheit diese zur Bereitstellung eines im vorigen beschriebenen Verfahrens befähigen. Bei dem Fahrzeug kann es sich um ein beliebiges Straßenfahrzeug wie einen Pkw, Lkw, Transporter, Bus oder dergleichen handeln.

Weitere vorteilhafte Ausgestaltungen des erfindungsgemäßen Verfahrens zur Bestimmung der von dem Fahrzeug befahrenen Straße ergeben sich auch aus den Ausführungsbeispielen, welche nachfolgend unter Bezugnahme auf die Figuren näher beschrieben werden.

Dabei zeigen:
- Fig. 1: eine schematische Darstellung einer satelittengestützten Verortung eines Fahrzeugs auf einer Straße;
- Fig. 2: eine schematische Darstellung zweier zueinander parallel verlaufender Straßenabschnitte im Bereich einer Kurve;
- Fig. 3: ein schematisches Ablaufdiagramm eines erfindungsgemäßen Verfahrens zum Verorten des Fahrzeugs auf einer Straße oder Parallelstraße;
- Fig. 4: ein Diagramm, zeigend den Verlauf einer Konfidenz über einer Krümmungsinformationsdifferenz; und
- Fig. 5: ein Diagramm, zeigend einen Vergleich der Wahrscheinlichkeit, dass eine zweite Krümmungsinformation auf einer störbehafteten Messung auf der Straße beruht zur Wahrscheinlichkeit, dass die zweite Krümmungsinformation auf einer störbehafteten Messung auf der Parallelstraße beruht.

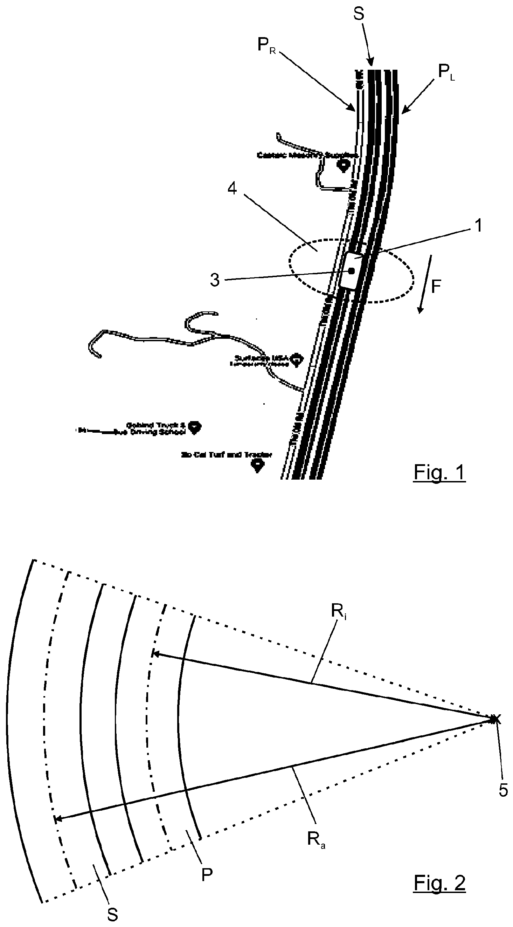

Figur 1 zeigt einen Kartenausschnitt mit drei parallel zueinander verlaufenden Straßen S, P_{R} und P_{L}. Die beiden Straßen S und P_{L} gehören zu einer Schnellfahrtstraße wie einer Autobahn, einem Highway oder dergleichen. Die Straße P_{R} entspricht einer zur Schnellfahrtstraße parallel verlaufenden Straße, wie beispielsweise einer Landstraße, einem Feldweg oder dergleichen. Insbesondere kann eine Fahrerassistenzfunktion, wie eine zur zumindest teilautomatisierten Steuerung eines in Figur 1 gezeigten Fahrzeugs 1 verwendbare Fahrerassistenzfunktion, lediglich auf der Schnellfahrtstraße, also den beiden Straßen S und P_{L}, zur Anwendung freigegeben sein. Dies erfordert eine Differenzierung des Aufenthalts des Fahrzeugs 1 auf der Straße P_{R}, S oder P_{L}.

Typischerweise erfolgt die Verortung des in eine Fahrtrichtung F reisenden Fahrzeugs 1 mit einem geeigneten navigationssatellitensystembasierten Positionsbestimmungsmittels. Das Fahrzeug 1 bzw. eine nicht näher dargestellten vom Fahrzeug 1 umfasste Recheneinheit ermittelt somit eine GNSS-Position 3. Die satellitengestützte Positionsbestimmung ist jedoch fehlerbehaftet, was in Figur 1 durch einen Aufenthaltswahrscheinlichkeitsbereich 4 angedeutet ist. Dieser Aufenthaltswahrscheinlichkeitsbereich 4 kann auch als sogenanntes "Protection Limit" bezeichnet werden. Das Fahrzeug 1 kann sich also theoretisch nicht direkt an der GNSS-Position 3, sondern an jedem beliebigen Ort innerhalb des Aufenthaltswahrscheinlichkeitsbereichs 4 aufhalten. Somit kann der Aufenthalt des Fahrzeugs 1 auf den beiden parallel zur Straße S verlaufenden Parallelstraßen P_{R} und P_{L} nicht ausgeschlossen werden. Somit darf die Fahrerassistenzfunktion nicht zur Freigabe im Fahrzeug 1 bereitgestellt werden, da sich das Fahrzeug auch auf dem Feldweg bzw. der Landstraße aufhalten könnte, und dort die Nutzung der Fahrerassistenzfunktion verboten sein kann.

Figur 1 verdeutlicht den Bedarf nach einem Verfahren, mit dem es ermöglicht wird, zuverlässig zu differenzieren auf welcher Straße S, P_{L}, P_{R} sich das Fahrzeug 1 tatsächlich aufhält.

Zur Lösung der Aufgabe dient das erfindungsgemäße Verfahren, dessen Erfindungsgedanke anhand von Figur 2 erläutert wird. So zeigt Figur 2 zwei zueinander parallel verlaufende Straßenabschnitte im Bereich einer Kurve. Dabei liegt die Straße S weiter außen und die Parallelstraße P weiter innen in Richtung eines gemeinsamen Kreismittelpunkts 5. Die Straße S ist dabei mit dem Radius Rₐ um den Kreismittelpunkt 5 gekrümmt und die Parallelstraße P mit dem Radius Rᵢ. Durch eine Analyse der Krümmungsradien Rₐ, Rᵢ, bzw. einer entsprechenden repräsentativen Krümmungsinformation, lässt sich aufgrund des Unterschieds der Krümmungsradien Rₐ, Rᵢ der Aufenthalt des Fahrzeugs 1 auf einer der beiden Straßen S, P ermitteln.

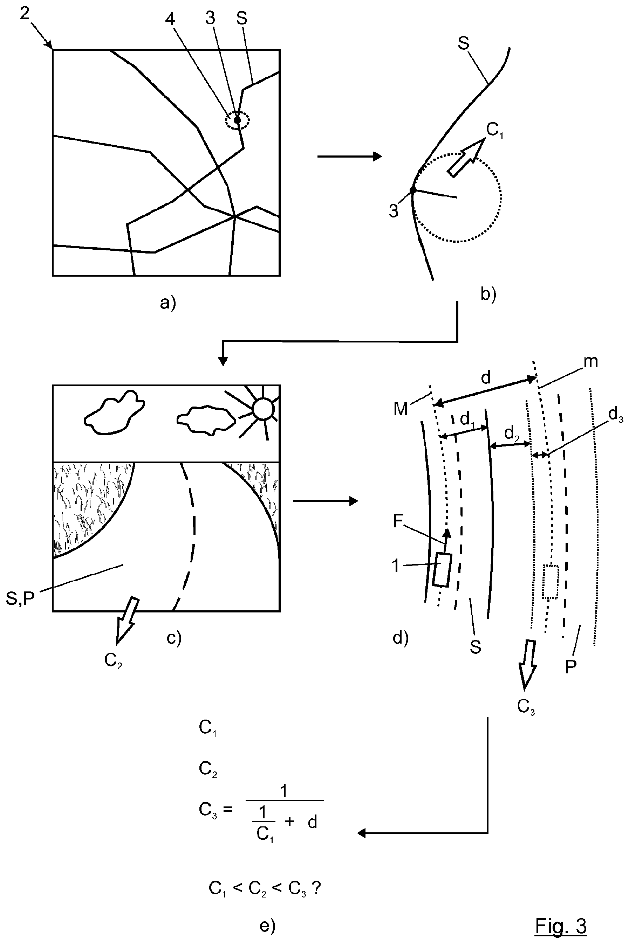

Der genaue Verfahrensablauf des erfindungsgemäßen Verfahrens wird anhand von Figur 3 erläutert. Im ersten in Figur 3a) dargestellten Verfahrensschritt ermittelt eine vom Fahrzeug 1 umfasste Recheneinheit in einer digitalen Straßenkarte 2 eine vom Fahrzeug 1 befahrende Straße S in Übereinkunft mit der mittels der Positionsbestimmungsmittel bestimmten GNSS-Position 3. Hierzu können bewährte map matching Verfahren eingesetzt werden.

Wie in Figur 3b) dargestellt, liest dann die Recheneinheit eine erste Krümmungsinformation C₁ der Straße S an der GNSS-Position 3 aus der digitalen Straßenkarte 2 aus. Diese Krümmungsinformation C₁ kann in Form von Kartenattributen einem jeweiligen Straßensegment zugeordnet sein. Eine Bestimmung auf Grundlage von geometrischen Beziehungen ist ebenfalls denkbar. Die Krümmungsinformation C1 und die im folgenden genannten Krümmungsinformationen C2 und C3 beziehen sich dabei vorzugsweise auf die Fahrspurmitte, auf der üblicherweise ein Fahrzeug fährt, alternativ kann auch die Straßenmitte herangezogen werden.

Nun folgt der in Figur 3c) dargestellte dritte Verfahrensschritt, in dem die Recheneinheit aus den von einer Umfeldsensorik des Fahrzeugs 1 gelieferten Sensordaten eine zweite Krümmungsinformation C₂ der vom Fahrzeug 1 befahrenen Straße S, P ermittelt. An dieser Stelle liegt dabei der Recheneinheit noch keine Information vor, ob sich das Fahrzeug 1 tatsächlich auf der Straße S oder der Parallelstraße P aufhält. Hierzu kann das Fahrzeug 1 beispielsweise mit einer oder mehreren Umgebungskameras den Verlauf der Straße S, P nachverfolgen und daraus die Krümmung des Straßenverlaufs ermitteln. Hierzu kann beispielsweise eine Fahrbahnmarkierungsdetektion durchgeführt werden, um den Verlauf der Straße S, P aus dem entsprechenden Fahrbahnmarkierungsverlauf abzuleiten. Eine jeweilige Krümmungsinformation C₁, C₂, C₃ kann dabei über die Breite der vom Fahrzeug 1 befahrenen Straße S, P gemittelt sein oder auch repräsentativ für die vom Fahrzeug 1 befahrene Fahrspur festgelegt sein.

Generell können die in Verfahrensschritte zur Bestimmung der ersten und zweiten Krümmungsinformation C₁, C₂ auch in umgekehrter Reihenfolge oder gleichzeitig ausgeführt werden.

Im nächsten, in Figur 3d) gezeigten Verfahrensschritt modelliert die Recheneinheit eine dritte Krümmungsinformation C₃ aus der ersten Krümmungsinformation C₁. Dabei nimmt die Recheneinheit die Anwesenheit zumindest einer Parallelstraße P neben der Straße S an. Im Stand der Technik sind nur Verfahren bekannt, welche Informationen über Parallelstraßen der digitalen Straßenkarte entnehmen, jedoch besteht generell die Möglichkeit, dass das Kartenmaterial veraltet oder unvollständig ist, und eine real vorhandene Parallelstraße P in der digitalen Straßenkarte 2 überhaupt nicht verzeichnet ist. Dem kann mittels dieser Modellierung entsprechend begegnet werden.

Zur Modellierung der dritten Krümmungsinformation C₃ bestimmt die Recheneinheit einen Vorgabewertert d zu der bzw. von der ersten Krümmungsinformation C₁.
Der Vorgabewert d kann einem festgelegten Wert entsprechen oder alternativ auch in Abhängigkeit der jeweiligen Fahrsituation adaptiv bestimmt werden. Hierzu können entsprechende Abstände aus der digitalen Straßenkarte 2 ausgelesen werden und/oder mittels der Umfeldsensorik ermittelt werden. So kann beispielsweise ein Abstand d₁ ermittelt werden, der dem Abstand der Mittellinie M der vom Fahrzeug 1 befahrenen Fahrspur zum äußeren Straßenrand beschreibt. Daran schließt sich ein Abstand d₂ an, der einem Abstand der Straße S zur Parallelstraße P entspricht. Daran kann sich wiederum ein Abstand d₃ anschließen, der dem Abstand des inneren Straßenrands der Parallelstraße P zur Mittellinie m der potenziell vom Fahrzeug 1 bei einem Aufenthalt auf der Parallelstraße P befahrenen Fahrspur entspricht, d entspricht dabei einer Summe der Abstände d₁, d₂ und d₃.

Der dritte Krümmungsinformation C₃ kann dann beispielsweise der Gleichung folgend C₃ = 1/(1/C₁₎ + d) ermittelt werden. Je nachdem, ob die Krümmung der Parallelstraße in Richtung Außen- oder Innenseite der Kurve liegt ist dabei d als positiver oder negativer Wert anzusetzen.

Anschließend folgt der in Figur 3e) gezeigte Verfahrensschritt, bei dem die erste, zweite und dritte Krümmungsinformation C₁, C₂ und C₃ miteinander verglichen werden. Dabei zeigt Figur 3e) eine bevorzugte Rechenvorschrift zum Modellieren der dritten Krümmungsinformation C₃, bei der der Vorgabewert d als Bruch bzw. Kehrwert addiert wird. Der Vergleich der Krümmungsinformationen C₁, C₂ und C₃ ist dabei angedeutet durch "C₁ < C₂ < C₃ ?".

Im einfachsten Falle legt die Recheneinheit den Aufenthalt des Fahrzeugs 1 auf der Straße S fest, wenn die zweite Krümmungsinformation C₂ eine größere Übereinstimmung mit der ersten Krümmungsinformation C₁ aufweist als die dritte Krümmungsinformation C₃. Entsprechend legt die Recheneinheit den Aufenthalt des Fahrzeugs 1 auf der Parallelstraße P fest, wenn die zweite Krümmungsinformation C₂ hingegen eine größere Übereinstimmung mit der dritten Krümmungsinformation C₃ als die erste Krümmungsinformation C₁ aufweist.

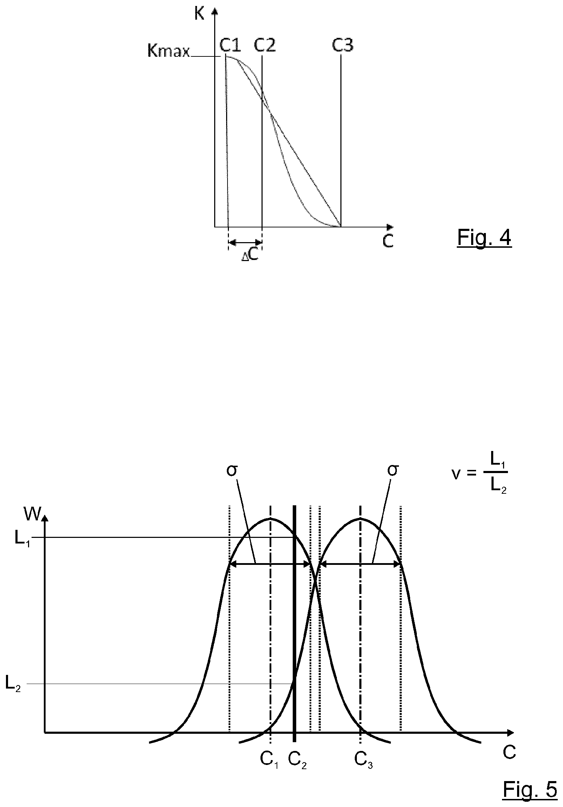

Anhand der Figuren 4 und 5 werden zwei alternative Möglichkeiten zum Festlegen des Aufenthalts des Fahrzeugs 1 auf der Straße S oder Parallelstraße P in Abhängigkeit des Vergleichs der Krümmungsinformationen C₁, C₂ und C₃ erläutert.

So kann eine Konfidenz K für den Aufenthalt auf der Straße S bzw. der Parallelstraße P ermittelt werden. Die Konfidenz K ist abhängig von einer Differenz ΔC zwischen der zweiten Krümmungsinformation C₂ zur ersten Krümmungsinformation C₁ sowie zur weiteren Differenz zur dritten Krümmungsinformation C₃. Beträgt die Differenz ΔC "0", so weist die Konfidenz K ein Maximum auf, beispielsweise 1 oder 100%. Mit zunehmender Nähe zu C3 sinkt die Konfidenz K. Dabei können verschiedene Verlaufsfunktionen festgelegt werden, anhand derer die Konfidenz K mit zunehmender Differenz ΔC sinkt, beispielsweise ein linearer, progressiver oder degressiver Verlauf. In Figur 4 sind zwei mögliche Verläufe dargestellt. In dem in Figur 4 gezeigten Ausführungsbeispiel ist die Differenz ΔC als Anteil der Größe "zweite Krümmungsinformation C₂" zur Referenzgröße, also der "ersten Krümmungsinformation C₁" gezeigt.

Anhand von Figur 5 wird das Entscheiden des Aufenthalts des Fahrzeugs 1 auf der Straße S oder der Parallelstraße P basierend auf einem Wahrscheinlichkeitsvergleich erläutert. In dem in Figur 5 gezeigten Diagramm sind die jeweiligen Krümmungsinformationen C₁ und C₃ in Form einer Gaußschen Normalverteilung eingezeichnet, wobei "W" ein Maß für die Wahrscheinlichkeit ist. Die Standardabweichung σ entspricht dabei der Messungenauigkeit der sensorbasierten Ermittlung der zweiten Krümmungsinformation C₂. Der jeweilige Erwartungswert der Gaußschen Normalverteilung entspricht der ersten Krümmungsinformation C₁ und der dritten Krümmungsinformation C₃. In das Diagramm wird die zweite Krümmungsinformation C₂ eingezeichnet und der jeweilige Funktionswert der um C₁ und C₃ eingezeichneten Normalverteilungsfunktionen an dieser Stelle ermittelt. Diese Funktionswerte werden als L₁ und L₂ bezeichnet. Anhand des Verhältnisses v aus L₁ zu L₂ lässt sich dann der Aufenthalt des Fahrzeugs 1 auf der Straße S oder der Parallelstraße P ermitteln. Hierzu wird das Verhältnis v mit einem entsprechend festgelegten Verhältnisschwellenwert verglichen. Sind die Abstände L₁ und L₂ gleichgroß, so kann nicht zwischen dem Aufenthalt auf der Straße S oder der Parallelstraße P differenziert werden. Ist hingegen beispielsweise der Funktionswert L₁ hundertmal größer als der Funktionswert L₂, so kann zuverlässig der Aufenthalt des Fahrzeugs 1 auf der Straße S bestätigt werden. Besonders bevorzugt wird dann die entsprechende Fahrerassistenzfunktion freigegeben.

Das erfindungsgemäße Verfahren erlaubt es mit einem geringen technischen Aufwand zuverlässig den Aufenthalt des Fahrzeugs 1 auf der Straße S oder der Parallelstraße P zu bestätigen. Es werden keine zusätzlichen Systemkomponenten wie beispielsweise aufwändige und teure Zusatzhardware für ein GNSS-System benötigt. Die Funktionsweise des erfindungsgemäßen Verfahrens ist analytisch nachvollziehbar und deterministisch. Somit wird das erfindungsgemäße Verfahren höchsten Sicherheitsanforderungen gerecht. Zudem wird es ermöglicht die Wahrscheinlichkeit, dass die Eigenposition des Fahrzeugs 1 auf der korrekten Straße S, P angenommen wurde, direkt zu messen.

## Patentansprüche

1. Verfahren zur Bestimmung der von einem Fahrzeug (1) befahrenen Straße (S, P),
wobei das Fahrzeug (1) mit einer Recheneinheit Sensordaten eines navigationssatellitensystembasierten Positionsbestimmungsmittels mit Sensordaten einer Umfeldsensorik fusioniert,
umfassend die folgenden von der Recheneinheit ausgeführten Verfahrensschritte:
- Ermitteln einer vom Fahrzeug (1) befahrenen Straße (S) in einer digitalen Straßenkarte (2) in Übereinkunft mit einer vom Positionsbestimmungsmittel ermittelten GNSS-Position (3);
- Auslesen einer ersten Krümmungsinformation (C₁) der Straße (S) an der GNSS-Position (3) aus der digitalen Straßenkarte (2);
- Ermitteln einer zweiten Krümmungsinformation (C₂) der vom Fahrzeug (1) befahrenen Straße (S,P) aus den von der Umfeldsensorik gelieferten Sensordaten;
- Modellieren von dritten Krümmungsinformationen (C₃) für eine vorhandene oder angenommene Parallelstraße (P) der vom Fahrzeug (1) befahrenen Straße (S) aus einem Vorgabewert (d) und der ersten Krümmungsinformation (C₁);
- Vergleichen der ersten (C₁), zweiten (C₂) und dritten Krümmungsinformation (C₃); und
- Festlegen des Aufenthalts des Fahrzeugs (1) auf der Straße (S) oder auf der Parallelstraße (P) in Abhängigkeit des Vergleichs der ersten (C₁), zweiten (C₂) und dritten Krümmungsinformation (C₃).

2. Verfahren nach Anspruch 1,
**dadurch gekennzeichnet, dass**
- die Recheneinheit den Aufenthalt des Fahrzeugs (1) auf der Straße (S) festlegt, wenn die zweite Krümmungsinformation (C₂) eine größere Übereinstimmung mit der ersten Krümmungsinformation (C₁) aufweist als die dritte Krümmungsinformation (C₃) oder die Recheneinheit den Aufenthalt des Fahrzeugs (1) auf der Parallelstraße (P) festlegt, wenn die zweite Krümmungsinformation (C₂) eine größere Übereinstimmung mit der dritten Krümmungsinformation (C₃) aufweist als die erste Krümmungsinformation (C₁);
- die Recheneinheit eine Konfidenz (K) für den Aufenthalt auf der Straße (S) und/oder der Parallelstraße (P) ermittelt, wobei die Konfidenz (K) einen Maximalwert annimmt, wenn die zweite Krümmungsinformation (C₂) identisch mit der ersten (C₁) ist und mit zunehmender Differenz (ΔC) zur ersten (C₁) und zunehmender Nähe zur dritten Krümmungsinformation (C₃) abnimmt; oder
- die Recheneinheit ein Verhältnis (v) aus der Wahrscheinlichkeit, dass die zweite Krümmungsinformation (C₂) auf einer störbehafteten Messung auf der Straße (S) basiert zu der Wahrscheinlichkeit, dass die zweite Krümmungsinformation (C₂) auf einer störbehafteten Messung auf der Parallelstraße (P) basiert, bildet, und in Abhängigkeit des Vergleichs des Verhältnisses mit einem festgelegten Verhältnisschwellenwert festlegt, ob sich das Fahrzeug (1) auf der Straße (S) oder der Parallelstraße (P) befindet.

3. Verfahren nach Anspruch 1 oder 2,
**dadurch gekennzeichnet, dass**
als Krümmungsinformation (C₁, C₂, C₃) der Krümmungswert oder Krümmungsradius des vom Fahrzeug (1) befahrenen Straßenabschnitts an der Aufenthaltsposition des Fahrzeugs (1) verwendet wird.

4. Verfahren nach einem der Ansprüche 1 bis 3,
**dadurch gekennzeichnet, dass**
ein fest vorgegebener Vorgabewert (d) verwendet wird oder ein adaptiver Vorgabewert (d) verwendet wird; wobei
die Recheneinheit zur Bestimmung des adaptiven Vorgabewerts (d) die Fahrbahnbreite und/oder die Randbegrenzungsbreite aus den von der Umfeldsensorik ermittelten Sensordaten ermittelt und/oder aus der digitalen Straßenkarte (2) ausliest und den adaptiven Vorgabewert (d) in Abhängigkeit der Fahrbahnbreite und/oder Randbegrenzungsbreite festlegt.

5. Verfahren nach einem der Ansprüche 1 bis 4,
**dadurch gekennzeichnet, dass**
die Recheneinheit das Abarbeiten der weiteren Verfahrensschritte unterlässt, wenn die erste (C₁) und/oder zweite Krümmungsinformation (C₂) größer ist als ein vorgegebener Krümmungsschwellenwert oder eine Differenz (ΔC) der zweiten Krümmungsinformation (C₂) zur ersten Krümmungsinformation (C₁) oder der zweiten Krümmungsinformation (C₂) zur dritten Krümmungsinformation (C₃) größer ist als ein vorgegebener Differenzschwellenwert.

6. Verfahren nach einem der Ansprüche 1 bis 5,
**dadurch gekennzeichnet, dass**
die Recheneinheit die erste (C₁), zweite (C₂) und dritte Krümmungsinformation (C₃) für eine festgelegte Zeitdauer oder eine festgelegte vom Fahrzeug (1) zurückzulegende Wegstrecke aggregiert und die jeweiligen aggregierten Krümmungsinformationen (C₁, C₂, C₃), und/oder die Vergleichsergebnisse für diese Krümmungsinformationen, mittelt und/oder filtert, bevor die Recheneinheit ermittelt, ob sich das Fahrzeug (1) auf der Straße (S) oder der Parallelstraße (P) befindet.

7. Verfahren nach einem der Ansprüche 1 bis 6,
**dadurch gekennzeichnet, dass**
die Recheneinheit eine auf der Straße (S) freigegebene Fahrerassistenzfunktion zur Anwendung bereitstellt, wenn der Aufenthalt des Fahrzeugs (1) auf der Straße (S) bestätigt wird und die Recheneinheit die Anwendung der Fahrerassistenzfunktion unterbindet, wenn der Aufenthalt des Fahrzeugs (1) auf der Parallelstraße (P) bestätigt wird.

8. Fahrzeug (1), umfassend eine Recheneinheit, ein navigationssatellitensystembasiertes Positionsbestimmungsmittel und eine Umfeldsensorik,
wobei die Recheneinheit über zumindest Lesezugriff auf ein computerlesbares Speichermedium verfügt, beherbergend ein Computerprogrammprodukt, umfassend maschineninterpretierbare Anweisungen, die bei einer Ausführung durch einen Prozessor der Recheneinheit diese zur Bereitstellung eines Verfahrens nach einem der Ansprüche 1 bis 7 befähigen.

## Claims

1. Method for determining the road (S, P) on which a vehicle (1) is traveling, wherein the vehicle (1) fuses sensor data from a navigation satellite system-based positioning means with sensor data from a surroundings sensor system by means of a computing unit, the method comprising the following method steps carried out by the computing unit:
- ascertaining a road (S) on which the vehicle (1) is traveling in a digital road map (2) and in accordance with a GNSS position (3) ascertained by the positioning means;
- reading out first curvature information (C₁) concerning the road (S) at the GNSS position (3) from the digital road map (2);
- ascertaining second curvature information (C₂) concerning the road (S,P) on which the vehicle (1) is traveling from the sensor data supplied by the surroundings sensor system;
- modeling third curvature information (C₃) for an existing or assumed parallel road (P) parallel to the road (S) on which the vehicle (1) is traveling from a default value (d) and the first curvature information (C₁);
- comparing the first (C₁), second (C₂) and third curvature information (C₃); and
- establishing whether the vehicle (1) is located on the road (S) or on the parallel road (P) on the basis of the comparison of the first (C₁), second (C₂) and third curvature information (C₃).

2. Method according to claim 1,
**characterized in that**
- the computing unit establishes that the vehicle (1) is located on the road (S) if the correspondence of the second curvature information (C₂) to the first curvature information (C₁) is greater than that of the third curvature information (C₃) or the computing unit establishes that the vehicle (1) is located on the parallel road (P) if the correspondence of the second curvature information (C₂) to the third curvature information (C₃) is greater than that of the first curvature information (C₁);
- the computing unit ascertains a confidence (K) for the vehicle being located on the road (S) and/or the parallel road (P), the confidence (K) adopting a maximum value if the second curvature information (C₂) is identical to the first (C₁) and decreasing as the difference (ΔC) to the first (C₁) and the proximity to the third curvature information (C₃) increase; or
- the computing unit calculates a ratio (v) of the probability that the second curvature information (C₂) is based on a measurement on the road (S) that was subjected to interference to the probability that the second curvature information (C₂) is based on a measurement on the parallel road (P) that was subjected to interference, and establishes, on the basis of the comparison of the ratio with an established ratio threshold value, whether the vehicle (1) is on the road (S) or the parallel road (P).

3. Method according to claim 1 or 2,
**characterized in that**
the curvature value or curvature radius, at the location of the vehicle (1), of the road section on which the vehicle (1) is traveling is used as curvature information (C₁, C₂, C₃).

4. Method according to any of claims 1 to 3,
**characterized in that**
a fixedly predefined default value (d) is used or an adaptive default value (d) is used;
the computing unit, in order to determine the adaptive default value (d), ascertaining the road width and/or the edge boundary width from the sensor data ascertained by the surroundings sensor system and/or reading out the road width and/or the edge boundary width from the digital road map (2), and establishing the adaptive default value (d) on the basis of the road width and/or edge boundary width.

5. Method according to any of claims 1 to 4,
**characterized in that**
the computing unit refrains from processing the further method steps if the first (C₁) and/or second curvature information (C₂) is greater than a predefined curvature threshold value or if a difference (ΔC) between the second curvature information (C₂) and the first curvature information (C₁) or between the second curvature information (C₂) and the third curvature information (C₃) is greater than a predefined difference threshold value.

6. Method according to any of claims 1 to 5,
**characterized in that**
the computing unit aggregates the first (C₁), second (C₂) and third curvature information (C₃) for an established time period or an established distance to be traveled by the vehicle (1), and averages and/or filters the relevant aggregated curvature information (C₁, C₂, C₃), and/or the comparison results for this curvature information, before the computing unit ascertains whether the vehicle (1) is on the road (S) or the parallel road (P).

7. Method according to any of claims 1 to 6,
**characterized in that**
the computing unit makes a driver assistance function that is enabled on the road (S) available to be applied if it is confirmed that the vehicle (1) is located on the road (S), and the computing unit prevents the application of the driver assistance function if it is confirmed that the vehicle (1) is located on the parallel road (P).

8. Vehicle (1) comprising a computing unit, a navigation satellite system-based positioning means and a surroundings sensor system, wherein the computing unit has at least read access to a computer-readable storage medium, containing a computer program product comprising machine-interpretable instructions which, when executed by a processor of the computing unit, allow said computing unit to make available a method according to any of claims 1 to 7.

## Revendications

1. Procédé permettant de déterminer la route (S, P) parcourue par un véhicule (1), dans lequel le véhicule (1) fusionne avec une unité de calcul des données de capteur d'un moyen de détermination de position basé sur un système de navigation par satellite avec des données de capteur d'un ensemble de capteurs d'environnement, comprenant les étapes de procédé suivantes exécutées par l'unité de calcul :
- définition d'une route (S) parcourue par le véhicule (1) sur une carte routière numérique (2) en accord avec une position GNSS (3) définie par le moyen de détermination de position ;
- lecture de premières informations de courbure (C₁) de la route (S) à la position GNSS (3) à partir de la carte routière numérique (2) ;
- définition de deuxièmes informations de courbure (C₂) de la route (S, P) parcourue par le véhicule (1) à partir des données de capteur livrées par l'ensemble de capteurs d'environnement ;
- modélisation de troisièmes informations de courbure (C₃) pour une route parallèle (P) existante ou supposée à la route (S) parcourue par le véhicule (1) à partir d'une valeur donnée (d) et des premières informations de courbure (C₁) ;
- comparaison des premières (C₁), des deuxièmes (C₂) et des troisièmes informations de courbure (C₃) ; et
- spécification de l'emplacement du véhicule (1) sur la route (S) ou sur la route parallèle (P) en fonction de la comparaison des premières (C₁), deuxièmes (C₂) et troisièmes informations de courbure (C₃).

2. Procédé selon la revendication 1,
**caractérisé en ce que**
- l'unité de calcul spécifie l'emplacement du véhicule (1) sur la route (S) lorsque les deuxièmes informations de courbure (C₂) présentent une plus grande concordance avec les premières informations de courbure (C₁) que les troisièmes informations de courbure (C₃) ou l'unité de calcul spécifie l'emplacement du véhicule (1) sur la route parallèle (P) lorsque les deuxièmes informations de courbure (C₂) présentent une plus grande concordance avec les troisièmes informations de courbure (C₃) que les premières informations de courbure (C₁) ;
- l'unité de calcul définit une confiance (K) pour l'emplacement sur la route (S) et/ou la route parallèle (P), dans lequel la confiance (K) prend une valeur maximale lorsque les deuxièmes informations de courbure (C₂) sont identiques aux premières (C₁) et diminue avec une différence (ΔC) croissante par rapport aux premières (C₁) et une proximité croissante par rapport aux troisièmes informations de courbure (C₃) ; ou
- l'unité de calcul forme un rapport (v) entre la probabilité que les deuxièmes informations de courbure (C₂) soient basées sur une mesure perturbée sur la route (S) et la probabilité que les deuxièmes informations de courbure (C₂) soient basées sur une mesure perturbée sur la route parallèle (P), et spécifie en fonction de la comparaison du rapport avec une valeur seuil de rapport spécifiée si le véhicule (1) se trouve sur la route (S) ou sur la route parallèle (P).

3. Procédé selon la revendication 1 ou 2,
**caractérisé en ce que**
la valeur de courbure ou le rayon de courbure de la section de route parcourue par le véhicule (1) à la position d'emplacement du véhicule (1) est utilisé comme informations de courbure (C₁, C₂, C₃).

4. Procédé selon l'une des revendications 1 à 3,
**caractérisé en ce que**
une valeur donnée (d) prédéfinie est utilisée ou une valeur donnée (d) adaptative est utilisée ; dans lequel
l'unité de calcul définit, pour la détermination de la valeur donnée (d) adaptative, la largeur de chaussée et/ou la largeur de délimitation des bords à partir des données de capteurs définies par l'ensemble de capteurs d'environnement et/ou les lit à partir de la carte routière numérique (2) et spécifie la valeur donnée (d) adaptative en fonction de la largeur de chaussée et/ou de la largeur de délimitation des bords.

5. Procédé selon l'une des revendications 1 à 4,
**caractérisé en ce que**
l'unité de calcul s'abstient de traiter les autres étapes de procédé lorsque les premières (C₁) et/ou les deuxièmes informations de courbure (C₂) sont supérieures à une valeur seuil de courbure prédéfinie ou lorsqu'une différence (ΔC) des deuxièmes informations de courbure (C₂) par rapport aux premières informations de courbure (C₁) ou des deuxièmes informations de courbure (C₂) par rapport aux troisièmes informations de courbure (C₃) est supérieure à une valeur seuil de différence prédéfinie.

6. Procédé selon l'une des revendications 1 à 5,
**caractérisé en ce que**
l'unité de calcul agrège les premières (C₁), les deuxièmes (C₂) et les troisièmes informations de courbure (C₃) pour une durée spécifiée ou une distance spécifiée à parcourir par le véhicule (1) et fait la moyenne et/ou filtre les informations de courbure (C₁, C₂, C₃) agrégées respectives, et/ou les résultats de comparaison pour lesdites informations de courbure, avant que l'unité de calcul ne définisse si le véhicule (1) se trouve sur la route (S) ou la route parallèle (P).

7. Procédé selon l'une des revendications 1 à 6,
**caractérisé en ce que**
l'unité de calcul met à disposition une fonction d'assistance au conducteur validée sur la route (S) pour application lorsque l'emplacement du véhicule (1) sur la route (S) est confirmé et l'unité de calcul empêche l'application de la fonction d'assistance au conducteur lorsque l'emplacement du véhicule (1) sur la route parallèle (P) est confirmé.

8. Véhicule (1), comprenant une unité de calcul, un moyen de détermination de position basé sur un système de navigation par satellite et un ensemble de capteurs d'environnement, dans lequel l'unité de calcul dispose d'au moins un accès en lecture à un support de stockage lisible par ordinateur, hébergeant un produit-programme d'ordinateur comprenant des instructions interprétables par une machine qui, lorsqu'elles sont exécutées par un processeur de l'unité de calcul, permettent à celle-ci de mettre à disposition un procédé selon l'une des revendications 1 à 7.
